Europäisches Patentamt

(19) European Patent Office

Office européen des brevets

(11) EP 0 619 784 B1

## (12) FASCICULE DE BREVET EUROPEEN

(45) Date de publication et mention
de la délivrance du brevet:
**11.09.1996 Bulletin 1996/37**

(21) Numéro de dépôt: **93901717.4**

(22) Date de dépôt: **21.12.1992**

(51) Int. Cl.⁶: $B60C\ 5/16$

(86) Numéro de dépôt international:
**PCT/EP92/02972**

(87) Numéro de publication internationale:
**WO 93/12943 (08.07.1993 Gazette 1993/16)**

(54) **BOURRELETS DE PNEUMATIQUES SANS CHAMBRE A AIR ET LEURS PROCEDES DE FABRICATION**

WUELSTE FUER SCHLAUCHLOSE LUFT UND IHRE VERFAHREN ZUR HERSTELLUNG

TUBELESS TYRE BEADS AND METHODS FOR MANUFACTURING SAME

(84) Etats contractants désignés:
**DE ES FR GB IT**

(30) Priorité: **31.12.1991 FR 9116458**

(43) Date de publication de la demande:
**19.10.1994 Bulletin 1994/42**

(73) Titulaire: **COMPAGNIE GENERALE DES
ETABLISSEMENTS
MICHELIN - MICHELIN & CIE
F-63040 Clermont-Ferrand Cédex (FR)**

(72) Inventeur: **BILLIERES, Jean
F-63100 Clermont-Ferrand (FR)**

(74) Mandataire: **Devaux, Edmond-Yves
Michelin & Cie
Service SRK. Brevets
23, Place des Carmes
63040 Clermont-Ferrand Cédex (FR)**

(56) Documents cités:
EP-A- 0 448 905          DE-B- 1 035 500
FR-A- 2 299 978          FR-A- 2 611 210
FR-A- 2 636 889

• DATABASE WPIL Week 9141, 7 Février 1991
Derwent Publications Ltd., London, GB; AN 91-
302067 & SU, A, 1 625 713 ( LARGE TYRE RES
INST ) 7 Février 1991

## Description

L'invention se rapporte aux pneumatiques appartenant à la catégorie des pneus dits "sans chambre à air", et plus précisément aux bourrelets de ces pneumatiques.

De tels pneumatiques largement utilisés en particulier pour les véhicules "poids lourds", comportent une armature de carcasse radiale, renforcée de câbles approximativement situés dans des plans comprenant l'axe de rotation du pneu, surmontée d'une armature de sommet et d'une bande de roulement, la (ou les) nappes de carcasse étant enroulée(s) à chacune de ses (leurs) deux extrémités autour d'une (de) tringle(s) quasiment inextensible(s).

Pour les pneumatiques "sans chambre à air", il est nécessaire que l'atmosphère de gonflage ne soit pas soumise à des pertes de matière par diffusion dans les matériaux de l'ensemble monté ou par des fuites provoquées par une mauvaise étanchéité des différentes surfaces de liaison entre pneumatique et jante.

Pour minimiser le plus possible les phénomènes de diffusion, la surface interne de ces pneumatiques est généralement recouverte d'une couche de "gomme intérieure" choisie pour ses excellentes propriétés d'imperméabilité. Généralement, les vulcanisats utilisés pour cette couche interne ne possèdent pas de bonnes propriétés mécaniques, car ils sont fréquemment formulés avec des caoutchoucs à base de polyisobutylène ou de leurs dérivés peu insaturés, peu renforcés, pour optimiser les propriétés d'imperméabilité, de résilience, de déformabilité et d'adhésion à la carcasse. La demande de brevet français FR-A-2 162 667 décrit cet aspect de l'art antérieur.

Pour minimiser les fuites possibles aux interfaces de contact des bourrelets sur la jante, un soin particulier doit être apporté à la conception, à la réalisation et au maintien en bon état de ces surfaces. L'étanchéité est assurée par un bon contact par pression des bourrelets des pneumatiques sur les jantes, l'effort de serrage étant assuré par la pression interne de l'atmosphère de gonflage et les formes des surfaces d'appui.

Le contact du bourrelet du pneumatique et de la jante doit assurer également la bonne transmission des efforts mécaniques dus aux couples moteurs ou freineurs par une liaison sans glissement important, en évitant une usure trop rapide des surfaces du bourrelet. Pour bien remplir ce rôle, le vulcanisat touchant la jante et formant la transition avec l'armature de carcasse et la (les) tringle(s), possède des valeurs de dureté et de module élevées. Il est habituellement formulé avec des élastomères généralement très insaturés, fortement chargés et réticulés. On appelle souvent "protecteur" ce mélange qui assure également un rôle de protection de la (des) tringle(s) et de l' (des) armature(s) de carcasse, en leur évitant en particulier les blessures directes par les outils utilisés lors des opérations de montage et démontage du pneumatique sur sa jante.

Les armatures de carcasse de pneumatiques ont connu des améliorations de qualité importantes, ce qui permet de les utiliser plusieurs fois par rechapages de la partie s'usant au contact du sol. Les surfaces et/ou les arêtes du caoutchouc des bourrelets sont de ce fait soumises à des opérations de montage et démontage plus fréquentes pouvant les détériorer. Par ailleurs, les bourrelets sont soumis à des contraintes de vieillissement plus importantes du fait de l'augmentation de la durée de fonctionnement des carcasses. On observe en effet, après des essais prolongés de pneumatiques montés sur des jantes soumises aux échauffements dus aux freinages, une détérioration de l'adhésion des câblés d'armature carcasse dans la zone des bourrelets, et une évolution des propriétés du protecteur au contact des jantes, et de la partie au contact de l'air de gonflage : ces parties du protecteur durcissent de façon importante, et peuvent même devenir de ce fait beaucoup trop fragiles et cassantes. Ce durcissement et le craquelage qui s'ensuit favorisent les fuites de l'air de gonflage.

La présente invention a pour but de remédier aux inconvénients cités en recouvrant partiellement le protecteur constitué en partie de vulcanisat de forte rigidité proche des protecteurs de l'art antérieur, par une couche de mélange beaucoup plus imperméable, qui peut être proche des formulations et des propriétés de la gomme d'étanchéité, assurant ainsi de façon inhabituelle le contact avec la jante. On observe une amélioration notable de la durée de vie des protecteurs et des nappes et armatures sous-jaçantes, en résolvant les problèmes rencontrés, en particulier au niveau des propriétés mécaniques et de l'étanchéité des bourrelets, sans dégrader les autres caractéristiques ou performances du pneu.

Suivant l'invention, un pneumatique sans chambre à air comportant une armature de carcasse solidaire de tringles de bourrelets, et recouvert intérieurement avec une couche de gomme de faible rigidité imperméable à l'air de gonflage, les bourrelets étant recouverts au moins dans leur partie au contact avec la jante par des profilés circonférentiels appelés protecteurs, formés de gommes non imperméables et de forte rigidité, est caractérisé en ce que les protecteurs sont partiellement recouverts au moins radialement à l'intérieur et axialement vers l'intérieur par une couche de mélange imperméable, c'est à dire de coefficient de perméabilité à l'air à 80°C inférieur à

$$\frac{21 \times 10^{-17} \times m^2}{s \times Pa}$$

et de préférence inférieur à

$$\frac{14 \times 10^{-17} \times m^2}{s \times Pa}$$

et plus particulièrement inférieur à

$$\frac{7 \times 10^{-17} \times m^2}{s \times Pa}$$

et d'épaisseur comprise entre 0,1 et 1 mm, recouvrant la partie radialement intérieure du protecteur sur une longueur axiale telle que le rapport de cette longueur à la largeur axiale du bourrelet soit compris entre 0,2 et 0,7, sans être pénalisé par les inconvénients découlant de la présence d'un mélange peu rigide au contact de la jante : mauvais serrage du pneumatique sur sa jante qui aurait pour conséquence une mauvaise transmission des couples moteurs et freineurs, et une mauvaise tenue mécanique du bourrelet avec une abrasion trop importante. On peut en effet admettre pour ce mélange imperméable, des valeurs de rigidité assez faibles, exprimées par le module à 10% d'allongement $E10 =$ force/section initiale compris entre 1,5 et 8 MPa, même sur la partie du protecteur radialement la plus interne.

Selon un autre aspect de l'invention, il est avantageux que la couche de mélange imperméable ajoutée sur les bourrelets assure la continuité par contact avec la gomme d'étanchéité recouvrant le côté interne du pneumatique. Il est néammoins intéressant de réaliser des pneumatiques dont les protecteurs ne sont recouverts de mélange imperméable que principalement sur la partie touchant les sièges de la jante, ou principalement sur la surface en contact avec l'air de gonflage. Cette couche de mélange imperméable utilisée selon ces dispositions ralentit fortement la dégradation du protecteur et des nappes sous-jacentes, ce qui permettra des utilisations répétées plus nombreuses de la carcasse par rechapages. On peut penser que la solution proposée par l'invention combat les effets nocifs de l'oxygène de l'air de gonflage qui peut s'infiltrer entre le protecteur et la jante à partir de l'intérieur du pneumatique en se dirigeant axialement vers le talon du bourrelet. Cette infiltration pourrait être due à l'allègement des forces de serrage dans la zone axialement interne du bourrelet lors des efforts de roulage.

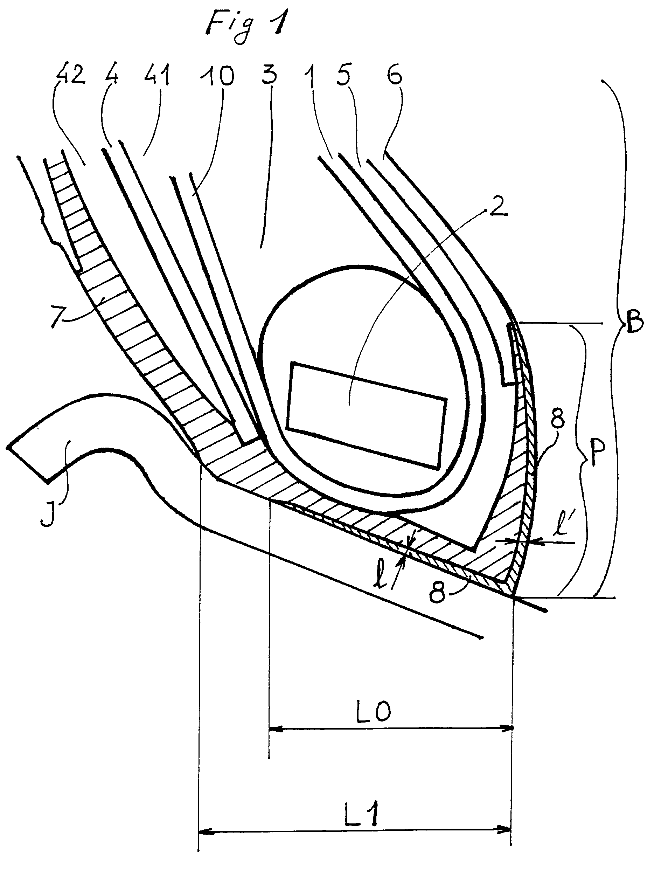

La figure unique du dessin annexé fera mieux comprendre comment l'invention peut être réalisée.

Cette figure représente la coupe transversale dans la zone d'un bourrelet (B) monté sur son siège de jante (J), pour un exemple de pneumatique selon l'invention. Une armature de carcasse (1) est ancrée à une tringle (2) dans le bourrelet (B) en formant un retournement (10) replié sur des bourrages (3) de gomme et complétée par un raidisseur (4) compris entre deux couches de gomme (41 et 42), et posé axialement à l'extérieur du retournement (10). L'armature de carcasse (1) est recouverte intérieurement d'une couche de gomme de renfort (5), elle-même recouverte d'une couche de gomme intérieure (6) d'épaisseur comprise entre 1 et 3 mm , choisie pour ses qualités d'imperméabilité, et s'achevant dans la partie intérieure ou pointe (P) du bourrelet.

Le bourrelet (B) de l'art antérieur est recouvert axialement à l'extérieur, radialement à l'intérieur et axialement à l'intérieur en suivant une partie du pourtour extérieur des nappes ou gommes (42, 4, 41, 1, 5, 6), par un protecteur (7) constitué généralement d'un vulcanisat très rigide et présentant de bonnes propriétés de résistance à l'usure sur la jante.

Conformément à l'invention, ce protecteur (7) est recouvert d'une couche de mélange (8) imperméable à l'air, de même composition ou non que la gomme intérieure (6). Cette couche (8) s'étend axialement sous le siège du bourrelet (B) sur une distance L0 comptée à partir de la pointe du bourrelet, telle que son rapport L0/L1 à la largeur totale L1 du siège du bourrelet soit comprise entre 0,2 et 0,7. La couche (8) est par ailleurs d'une épaisseur I sensiblement constante comprise entre 0,1 et 1 mm. Elle peut être prolongée intérieurement dans une direction radiale avec une épaisseur l' comprise entre 0,1 et 2 mm, sur la surface du protecteur qui fait face à l'air de gonflage, de préférence en assurant la continuité par contact avec la couche (6). Un prolongement de la couche (8) du côté extérieur (entre le bourrelet et le crochet de jante ) est exclu pour conserver un bon serrage du pneu sur sa jante. Dans une autre version, la couche de gomme (8) recouvre essentiellement une partie du protecteur qui se trouve au contact de la jante avec ou sans un léger recouvrement de la surface intérieure du protecteur (7) dirigée vers l'air de gonflage. Dans une autre version, la couche de gomme (8) recouvre essentiellement la partie du protecteur qui fait face à l'air de gonflage, avec un léger recouvrement radialement interne dans une direction axialement externe d'une partie du protecteur (7) au contact de la jante.

Différents modes de réalisation pratique de l'invention sont possibles : par exemple les différentes couches de caoutchouc de la zone des bourrelets peuvent être posées une à une sur le tambour de confection du pneumatique d'une façon classique, la couche de gomme imperméable (8) d'abord, puis la couche (6) venant à son contact ou en superposition, puis la couche (7), et les autres composants ajoutés de façon habituelle. Au cas où les gommes (8) et (6) sont de même composition, il est aussi possible de les poser en une seule étape puis de disposer le protecteur (7). Un autre mode de réalisation consiste à préparer à l'avance la couche de protecteur (7) muni d'une couche de mélange imperméable (8), et de disposer en une opération, l'ensemble sur le tambour de confection avant ou après la couche (6) ou sur l'ébauche du pneumatique cru. La réalisation de l'ensemble (7) plus (8) peut s'effectuer par empilement des couches obtenues par calandrages ou par co-extrusion. La couche (8) peut aussi être appliquée sur le pneu cuit. La couche (8) peut également être obtenue par application d'une dispersion fluide des constituants du mélange, également sur le pneu cru ou bien après cuisson. La couche (8) peut être disposée à l'occasion d'opérations de rechapages, ou même de démontages de contrôle et d'entretien des pneumatiques, ce qui permet de traiter des pneumatiques qui ne bénéficiaient pas encore de ce perfectionnement, et de remettre en état des bourrelets de pneumatiques selon l'invention. La vulcanisation de la couche (8) appliquée sur un pneu cuit peut se faire par chauffage pour les gommes ne vulcanisant pas à la température ambiante.

Un pneumatique poids lourds muni de bourrelets conformes à l'invention et soumis à un essai de roulage prolongé, présente un protecteur (7) pratiquement intact assurant toujours une bonne étanchéité, alors que le protecteur (7) d'un pneu témoin selon l'art antérieur est fortement durci par évolution thermo-oxydante et peut même présenter des craquelures. De même, les amorces de décollement des câbles de l'armature de carcasse (1) dans la zone des bourrelets sont en bien moindre nombre dans le cas où le protecteur est recouvert de la couche de gomme (8). On remarque généralement que les bourrelets selon l'invention permettent de tripler la durée des essais de roulage avant d'obtenir le niveau de dégradation de ceux de l'art antérieur.

**Revendications**

1. Pneumatique sans chambre à air comportant une armature de carcasse (1) solidaire de tringles (2), de bourrelets (B), et recouvert intérieurement avec une couche de gomme de faible rigidité (6) imperméable à l'air de gonflage, les bourrelets étant recouverts au moins dans leur partie au contact avec la jante de montage par des profilés circonférentiels (7) appelés protecteurs, formés de gommes non imperméables et de forte rigidité, caractérisé en ce que les protecteurs sont partiellement recouverts au moins radialement à l'intérieur et axialement vers l'intérieur par une couche de mélange imperméable (8) de coefficient de perméabilité pour l'air à 80°C inférieur à

$$\frac{21 \times 10^{-17} \times m^2}{s \times Pa}$$

et d'épaisseur l comprise entre 0,1 et 1 mm, recouvrant la partie radialement intérieure du protecteur (7) sur une longueur axiale L0 telle que le rapport L0/L1 de L0 à la largeur axiale L1 du bourrelet (B) soit compris entre 0,2 et 0,7.

2. Pneumatique selon la revendication 1, caractérisé en ce que la couche de mélange imperméable (8) est prolongée intérieurement dans une direction radiale sur la surface du protecteur qui fait face à l'air de gonflage, par une couche de mélange imperméable d'une épaisseur l' comprise entre 0,1 et 2 mm , en assurant la continuité avec la gomme intérieure (6).

3. Pneumatique selon l'une des revendications 1 à 2, caractérisé en ce que la couche de mélange imperméable (8) présente un coefficient de perméabilité pour l'air à 80°C inférieur à

$$\frac{14 \times 10^{-17} \times m^2}{s \times Pa}.$$

4. Pneumatique selon l'une des revendications 1 à 2, caractérisé en ce que la couche de mélange imperméable (8) présente un coefficient de perméabilité pour l'air à 80°C inférieur à

$$\frac{7 \times 10^{-17} \times m^2}{s \times Pa}.$$

5. Pneumatique selon l'une des revendications 1 à 4, caractérisé en ce que la couche de mélange imperméable (8) présente une valeur de module à 10% d'allongement E10 = force/section initiale compris entre 1,5 et 8 MPa.

6. Procédé permettant la réalisation du pneumatique décrit dans l'une des revendications 1 à 5, caractérisé en ce que le profilé protecteur (7) muni de sa couche de mélange imperméable (8) est posé sur le tambour de confection ou sur l'ébauche du pneumatique cru en une seule opération.

7. Procédé permettant la réalisation du pneumatique décrit dans l'une des revendications 1 à 5, caractérisé en ce que la couche de mélange imperméable (8) est posée sur le pneumatique cru ou cuit.

8. Procédé permettant la réalisation du pneumatique décrit dans l'une des revendications 1 à 5, caractérisé en ce que la couche de mélange imperméable (8) est obtenue par application d'une dispersion fluide des constituants du mélange sur le pneumatique cru ou cuit.

**Claims**

1. A tubeless tyre comprising a carcass reinforcement (1) integral with bead wires (2) of beads (B), and covered internally with a layer of rubber (6) of low rigidity which is impermeable to the inflation air, the beads being covered at least in their part in contact with the rim by circumferential profiles (7) called protectors, formed of non-impermeable rubbers of high rigidity, characterised in that the protectors are partly covered at least radially on the inside and axially towards the inside by a layer of impermeable mix (8) of air permeability coefficient at 80°C less than

$$\frac{21 \times 10^{-17} \times m^2}{s \times Pa}$$

and of a thickness l of between 0.1 and 1 mm, covering the radially inner part of the protector (7) over an axial length L0 such that the ratio L0/L1 of L0 to the axial width L1 of the bead (B) is between 0.2 and 0.7.

2. A tyre according to Claim 1, characterised in that the layer of impermeable mix (8) is extended on the inside in a radial direction on the surface of the protector which faces the inflation air by a layer of impermeable mix of a thickness l' of between 0.1 and 2 mm, ensuring the continuity with the inner rubber (6).

3. A tyre according to one of Claims 1 to 2, characterised in that the layer of impermeable mix (8) has an air permeability coefficient at 80°C less than

$$\frac{14 \times 10^{-17} \times m^2}{s \times Pa}.$$

4. A tyre according to one of Claims 1 to 2, characterised in that the layer of impermeable mix (8) has an air permeability coefficient at 80°C less than

$$\frac{7 \times 10^{-17} \times m^2}{s \times Pa}.$$

5. A tyre according to one of Claims 1 to 4, characterised in that the layer of impermeable mix (8) has a value of modulus at 10% elongation E10 = force/initial section of between 1.5 and 8 MPa.

6. A method permitting the production of the tyre described in one of Claims 1 to 5, characterised in that the protector profile (7) provided with its layer of impermeable mix (8) is laid on the building drum or on the blank of the raw tyre in a single operation.

7. A method permitting the production of the tyre described in one of Claims 1 to 5, characterised in that the layer of impermeable mix (8) is laid on the raw or cured tyre.

8. A method permitting the production of the tyre described in one of Claims 1 to 5, characterised in that the layer of impermeable mix (8) is obtained by application of a fluid dispersion of the constituents of the mix on the raw or cured tyre.

**Patentansprüche**

1. Reifen ohne Luftkammer mit einer Karkassenlage (1), die fest mit Wulstkernen (2) und Wülsten (B) verbunden ist und auf der Innenseite mit einer Schicht aus Gummi mit geringer Starrheit (6) abgedeckt ist, der für die Aufpumpluft undurchlässig ist, wobei die Wülste mindestens in ihrem Bereich, der in Berührung mit der Montagefelge steht, durch Umfangsprofile (7) abgedeckt sind, die Schutzeinrichtungen bzw. Einlagen genannt werden sowie aus undurchlässigen Gummis und mit hoher Starrheit ausgebildet sind, dadurch gekennzeichnet, daß die Einlagen teilweise mindestens radial an der Innenseite und axial zur Innenseite hin durch eine Lage (8) aus einer undurchlässigen Mischung mit einem Durchlässigkeitsbeiwert für Luft bei 80°C abgedeckt sind, der niedriger ist als

$$\frac{21 \times 10^{-17} \times m^2}{s \times Pa}$$

und mit einer Dicke l, die zwischen 0,1 und 1 mm liegt, und die den radial innenliegenden Teil der Einlage (7) über eine solche axiale Länge L0 abdeckt, daß das Verhältnis L0/L1 von L0 zur axialen Breite L1 des Wulstes (B) zwischen 0,2 und 0,7 liegt.

2. Reifen nach Anspruch 1, dadurch gekennzeichnet, daß die Lage (8) aus undurchlässiger Mischung nach innen in einer radialen Richtung auf der Oberfläche der Einlage, die der Aufpumpluft zugewandt ist, durch eine Lage aus undurchlässiger Mischung mit einer Dicke l' verlängert ist, die zwischen 0,1 und 2 mm liegt und dadurch die Kontinuität mit dem Innengummi (6) herstellt.

3. Reifen nach einem der Ansprüche 1 bis 2, dadurch gekennzeichnet, daß die Lage (8) aus undurchlässiger Mischung einen Durchlässigkeitsbeiwert für Luft bei 80°C aufweist, der niedriger ist als

$$\frac{14 \times 10^{-17} \times m^2}{s \times Pa}.$$

4. Reifen nach einem der Ansprüche 1 bis 2, dadurch gekennzeichnet, daß die Lage (8) aus undurchlässiger Mischung einen Durchlässigkeitsbeiwert für Luft bei 80°C aufweist, der niedriger ist als

$$\frac{7 \times 10^{-17} \times m^2}{s \times Pa}.$$

5. Reifen nach einem der Ansprüche 1 bis 4, dadurch gekennzeichnet, daß die Lage (8) aus undurchlässiger Mischung einen Modulwert bei 10% Längung E10 = Kraft/Anfangsquerschnitt aufweist, der zwischen 1,5 und 8 MPa liegt.

6. Verfahren, das die Ausführung des in einem der Ansprüche 1 bis 5 beschriebenen Reifens gestattet, dadurch gekennzeichnet, daß das Schutz- bzw. Einlageprofil (7), das mit seiner Lage (8) aus undurchlässiger Mischung versehen ist, in einem einzigen Arbeitsgang auf die Aufbautrommel oder den Rohling des Rohreifens aufgelegt wird.

7. Verfahren, das die Ausführung des in einem der Ansprüche 1 bis 5 beschriebenen Reifens gestattet, dadurch gekennzeichnet, daß die Lage (8) aus undurchlässiger Mischung auf den rohen oder vulkanisierten Reifen aufgelegt wird.

8. Verfahren, das die Ausführung des in einem der Ansprüche 1 bis 5 beschriebenen Reifens gestattet, dadurch gekennzeichnet, daß die Lage (8) aus undurchlässiger Mischung durch Aufbringung einer flüssigen Dispersion aus den Mischungsbestandteilen auf den rohen oder vulkanisierten Reifen erhalten wird.

Fig 1